(19) Europäisches Patentamt
European Patent Office
Office européen des brevets

(11) Publication number: **0 383 843 B1**

(12) # EUROPEAN PATENT SPECIFICATION

(45) Date of publication of patent specification: **10.08.94** (51) Int. Cl.$^5$: **G03C 1/30**

(21) Application number: **89903856.6**

(22) Date of filing: **31.08.88**

(86) International application number:
**PCT/US88/03038**

(87) International publication number:
**WO 90/02357 (08.03.90 90/06)**

(54) **METHOD AND COMPOSITION FOR HARDENING GELATIN COMPOSITIONS.**

(43) Date of publication of application:
**29.08.90 Bulletin 90/35**

(45) Publication of the grant of the patent:
**10.08.94 Bulletin 94/32**

(84) Designated Contracting States:
**BE CH DE FR GB IT LI**

(56) References cited:
**EP-A- 0 281 146**

**Journal of the American Chemical Society, vol.103, 1981, American Chemical Society (Columbus, Ohio, US) P.J. Stang et al.: "Dication ether salts, R+-O-R+.2CF3SO3-, from the reaction of trifluoromethanesulfonic anhydride with activated ketones", pp. 4837-4845**

(73) Proprietor: **EASTMAN KODAK COMPANY (a New Jersey corporation)**
**343 State Street**
**Rochester New York 14650(US)**

(72) Inventor: **RIECKE, Edgar, Erick**
**843 Independence Drive**
**Webster, NY 14580(US)**
Inventor: **CHAPMAN, Derek, David**
**7 Andony Lane**
**Rochester, NY 14624(US)**
Inventor: **CHEN, Chung-Yuan**
**30 Duncan Drive**
**Rochester, NY 14612(US)**

(74) Representative: **Brandes, Jürgen, Dr. rer. nat. et al**
**Wuesthoff & Wuesthoff**
**Patent- und Rechtsanwälte**
**Schweigerstrasse 2**
**D-81541 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a method and hardener composition for hardening gelatin, particularly in photographic elements.

Gelatin is commonly used as a vehicle in photographic materials. Quite often, numerous layers in photographic elements, such as light-sensitive silver halide layers, filter layers, backing layers, antihalation layers, and overcoat layers, use gelatin as the primary binder.

Photographic elements are generally processed in aqueous processing solutions. Such processing results in excessive swelling and loss of strength of the gelatin binder unless the gelatin has been hardened. If the processing solution is maintained at a warm temperature, e.g., 40 ° C, the gelatin binder can dissolve, causing the layers of the element to disintegrate, unless the gelatin has been hardened.

A number of compounds have been used to harden gelatin. These include formaldehyde and free aldehydes as described in U.S. Patent 3,232,764, active esters as described in U.S. Patent 3,542,558, epoxy compounds as described in U.S. Patent 3,047,394, aziridines as described in U.S. Patent 2,950,197, and others well-known in the art. These compounds harden, or cross-link, gelatin, thus increasing its mechanical strength and reducing the swellability and solubility of the gelatin in aqueous processing solutions.

The above-described hardening compounds are, however, subject to a number of disadvantages. Some take an exceedingly long time after being cast and dried to give the desired degree of gelatin hardening, requiring elements containing gelatin hardened with those compounds to be aged for an extended time while the hardening process is completed. In other words, these hardeners exhibit after-hardening. Additionally, a number of compounds exhibit adverse effects on the photographic properties of elements in which they are used. Such adverse effects can include an increase in fog or a reduction in light sensitivity or photographic speed.

In order to avoid the time and expense of keeping large quantities of gelatin-containing photographic elements for long periods while the hardening process is completed, a number of so-called fast-acting hardeners have been described in the art. For example, U.S. Patent 4,063,952 describes a carbamoyl pyridinium hardening compound in which the pyridine ring carries a sulfoalkyl substituent. European Patent Application 162,308 describes a chloroformamidinium hardener, and U.S. Patent 4,612,280 describes an N-succinimidyloxyformamidinium hardener. These hardeners, however, suffer from a number of problems. Some of these hardeners exhibit after-hardening. Others have severe handling difficulties due to their hygroscopic nature, or poor hydrolytic stability, or both. Also, some of these hardeners adversely affect either the physical properties of photographic elements in which they are used (e.g., tackiness), or their sensitometric properties (e.g., speed loss). These problems are often aggravated by the fact that relatively large amounts of hardener are often required to achieve the desired hardening effect, leading to relatively large amounts of sometimes deleterious by-products.

It is therefore desirable to provide a hardener that effectively hardens gelatin in a short period of time, while substantially avoiding or reducing many of the above-described adverse effects. European Patent Application Publication No. 281,146 describes gelatin hardeners that provide rapid hardening of gelatin with relatively small amounts of hardener while reducing many of the adverse side-effects, such as after-hardening or adverse effects on photographic properties. This is accomplished by combining gelatin with a compound of the formula:

(I)

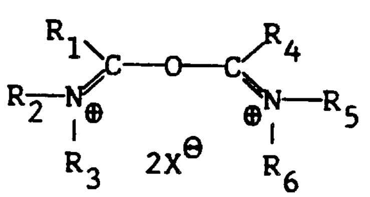

where $X^{\ominus}$ represents an anion or an anionic portion of the compound to form an intramolecular salt.

Many photographic elements utilize hydrophobic addenda dispersed in the layers. Such addenda include, for example, photographic couplers, brighteners, and the like. Coupler compounds react with oxidized developer during processing to form or release photographically useful groups, such as dyes, development modifiers such as DIR's, bleach accelerators, and others known in the art. Photographic couplers are disclosed in Research Disclosure, Item 17643, December, 1978 [hereinafter Research Disclosure I] and the references cited therein.

In order to achieve satisfactory performance of hydrophobic addenda in photographic elements, it is necessary to uniformly disperse them in the hydrophilic layers of photographic elements. One way of doing this is to dissolve the addenda in a high-boiling water-insoluble organic solvent or load it into polymer latex particles, as described in U.S. Patent 4,304,769, Research Disclosure, Item 15930, July, 1977, and Research Disclosure, Item 19551, December, 1980, and mix it with the hydrophilic coating solution along with a negatively-charged surfactant to form a dispersion of miniscule negatively-charged droplets of addenda dissolved in solvent. Another way this can be done is to precipitate microscopic solid particles of the addenda in the presence of a polymer by a solvent shift method, as disclosed in U.S. Patent 4,388,403. Alternatively, microscopic solid particles of the hydrophobic addenda can be precipitated by a pH shift, as disclosed in G.B. Patent 1, 193,349 and Research Disclosure, Item 16468, December, 1977, in the presence of or mixed later with the hydrophilic coating solution and a negatively-charged surfactant to form a dispersion of negatively-charged particles of hydrophobic addenda. Yet another method of dispersing hydrophobic addenda in hydrophilic layers is to append the hydrophobic addenda to a polymer backbone, and to disperse latex particles of the polymer in a hydrophilic coating solution, as described in U.S. Patent 4,612,278.

It is highly advantageous to minimize adverse interactions of these hydrophobic addenda with other components of the photographic element, such as the gelatin hardener. Such interaction can cause reduced hardening efficiency, reduced effectiveness of the hydrophobic addenda, or both.

It has now been found that certain hardener compounds within the scope of the above-identified European Patent Application Publication No. 281,146 offer significant advantages in the form of a low degree of interaction with negatively-charged hydrophobic addenda dispersions in the hydrophilic layers of photographic elements.

Therefore, according to the present invention, gelatin compositions comprising gelatin and a negatively-charged hydrophobic addenda dispersion are hardened with a compound having the formula:

(I) 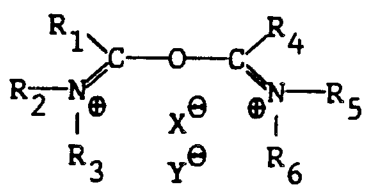

where $R_1$ represents hydrogen, alkyl of 1 to 20 carbon atoms, aralkyl of 7 to 20 carbon atoms, aryl of 6 to 20 carbon atoms, alkenyl of 2 to 20 carbon atoms, $-WR_7$,
the group

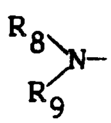 ,

or the group

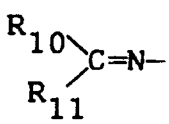 ,

wherein W represents sulfur or oxygen, and $R_7$, $R_8$, $R_9$, $R_{10}$, and $R_{11}$ each independently represents alkyl of 1 to 20 carbon atoms, aralkyl of 7 to 20 carbon atoms, aryl of 6 to 20 carbon atoms, or alkenyl of 2 to 20 carbon atoms, or $R_8$ and $R_9$ together form a heterocyclic ring, or $R_{10}$ and $R_{11}$ are each independently hydrogen or together form a ring structure, or $R_1$ together with $R_2$ or $R_3$ forms a heterocyclic ring,

$R_2$ and $R_3$ each independently represents alkyl of 1 to 20 carbon atoms, aralkyl of 7 to 20 carbon atoms, aryl of 6 to 20 carbon atoms, or alkenyl of 2 to 20 carbon atoms, or, taken together with $R_1$ or each other, forms a heterocyclic ring,

$R_4$, $R_5$, and $R_6$ are defined as are $R_1$, $R_2$, and $R_3$, respectively, and are the same as or different from $R_1$, $R_2$, or $R_3$, and

$X^{\ominus}$ represents an anionic portion of the compound to form an intramolecular salt and $Y^{\ominus}$ represents an anion or an anionic portion of the compound to form an intramolecular salt.

FIGS. 1-3 show plots of reciprocal viscosities versus time for test solutions containing gelatin hardened by various compounds with and without the presence of negatively-charged hydrophobic dispersions.

Compounds of the invention according to formula (I) are described in further detail below.

$R_1$ represents hydrogen, alkyl, aralkyl, aryl, alkenyl, $-WR_7$,
the group

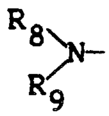,

the group

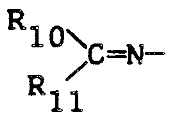,

with W representing sulfur or oxygen, and $R_7$, $R_8$, $R_9$, $R_{10}$, and $R_{11}$ each independently representing alkyl, aralkyl, aryl, or alkenyl. Alternatively, $R_8$ and $R_9$, or $R_{10}$ and $R_{11}$ may together form a ring structure. $R_{10}$ and $R_{11}$ may each also represent hydrogen. Also, $R_1$ together with $R_2$ may form a heterocyclic ring, which may be further condensed with another ring.

Preferably, $R_1$ is hydrogen, alkyl of 1 to 20 carbon atoms (e.g., methyl, ethyl, butyl, 2-ethylhexyl, or dodecyl), aralkyl of from 7 to 20 carbon atoms (e.g., benzyl, phenethyl), aryl of from 6 to 20 carbon atoms (e.g., phenyl, naphthyl), alkenyl of from 2 to 20 carbon atoms (e.g., vinyl, propenyl),
the group

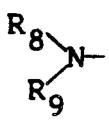,

the group

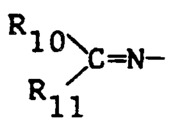,

$R_1$ can combine with $R_2$ or $R_3$ to form a heterocyclic ring of 5 to 8 atoms. This ring contains the nitrogen atom to which $R_2$ and $R_3$ are attached in formula (I) and may contain an additional nitrogen atom, or an oxygen or sulfur atom. Examples of such rings include pyridine, quinoline, isoquinoline, thiazole, benzothiazole, thiazoline, oxazole, benzoxazole, imidazole, benzimidazole, and oxazoline.

$R_7$, $R_8$, $R_9$, $R_{10}$, and $R_{11}$ are preferably alkyl of 1 to 20 carbon atoms (e.g., methyl, ethyl, butyl, 2-ethylhexyl, or dodecyl), aralkyl of from 7 to 20 carbon atoms (e.g., benzyl, phenethyl), aryl of from 6 to 20 carbon atoms (e.g., phenyl, naphthyl), or alkenyl of from 2 to 20 carbon atoms (e.g., vinyl, propenyl).

$R_8$ and $R_9$, or $R_{10}$ and $R_{11}$ can also combine to form a ring structure of 5 to 8 atoms. The $R_8$-$R_9$ ring contains the nitrogen atom to which $R_8$ and $R_9$ are attached, and may also contain an additional nitrogen atom, or an oxygen or sulfur atom. The $R_{10}$-$R_{11}$ ring may also contain one or more nitrogen atoms, an oxygen atom, a sulfur atom, or any combination thereof. Examples of such rings include pyrrolidine, piperidine, and morpholine.

$R_2$ and $R_3$ each independently represents alkyl, aryl, aralkyl, alkenyl, or may combine with $R_1$ or each other to form a heterocyclic ring. Preferably, $R_2$ or $R_3$ may each be alkyl of 1 to 20 carbon atoms (e.g., methyl, ethyl, butyl, 2-ethylhexyl, or dodecyl), aralkyl of from 7 to 20 carbon atoms (e.g., benzyl,

phenethyl), aryl of from 6 to 20 carbon atoms (e.g., phenyl, naphthyl), or alkenyl of from 2 to 20 carbon atoms (e.g., vinyl, propenyl). $R_2$ and $R_3$ also preferably combine with each other to form a heterocyclic ring of 5 to 8 atoms. This ring contains the nitrogen atom to which $R_2$ and $R_3$ are attached, and may also contain an additional nitrogen atom, or an oxygen or sulfur atom. Examples of such rings include pyrrolidine, piperidine, and morpholine. Either of $R_2$ or $R_3$ can combine with $R_1$ to form a heterocyclic ring, as described above in reference to $R_1$.

$R_4$, $R_5$, and $R_6$ are defined the same as described above for $R_1$, $R_2$, and $R_3$, respectively. $R_4$, $R_5$, and $R_6$ may each be the same as or different from $R_1$, $R_2$, and $R_3$,

$X^{\ominus}$ represents an anionic portion of the compound that forms an intramolecular salt. This anionic portion of the compound can be a substituent on any of the R groups described above. Such anionic substituents are well-known in the art and include, for example, sulfato, sulfo, acyl sulfamoyl such as $SO_2NHCOR$ where R is alkyl of 1 to 6 carbon atoms such as methyl, ethyl, and the like, and phosphono such as $CH_2CH_2PO_3H_2$. $Y^{\ominus}$ is an anion or an anionic portion of the compound that forms an intramolecular salt, as described above. Any anion that forms a salt compound according to formula (I) that is useful to harden gelatin according to the invention can be used as $Y^{\ominus}$. Preferred anions include a sulfonate ion such as methylsulfonate or p-toluene sulfonate $CF_3SO_3^{\ominus}$, $BF_4^{\ominus}$, $PF_6^{\ominus}$, and $ClO_4^{\ominus}$. In a preferred embodiment, $R_1$ and $R_2$ form a heterocyclic ring such as a pyridylium ring, $R_4$ and $R_5$ form a heterocyclic ring such as a pyridylium ring, and $X^{\ominus}$ may be a substituent on $R_3$ or $R_6$ and $Y^{\ominus}$ may be a substituent on the other of $R_3$ or $R_6$.

In addition to the above-described alkyl, aralkyl, aryl, alkenyl, and heterocyclic groups, groups, also useful as $R_1$, $R_2$, $R_3$, $R_4$, $R_5$, $R_6$, $R_7$, and $R_8$ include substituted alkyl, aralkyl, aryl, alkenyl, and heterocyclic groups. Useful substituents include halogen, alkyl (e.g., of 1 to 20 carbon atoms, for example, when the R's are other than alkyl), alkoxy of from 1 to 20 carbon atoms, aryloxy of from 6 to 20 carbon atoms, a sulfo group, N,N-disubstituted carbamoyl, N,N-disubstituted sulfamoyl, and other groups known to those skilled in the art that do not prevent the compounds from functioning as hardeners according to the invention.

Examples of compounds of formula (I) are shown below in Table I.

## Table I

Compound

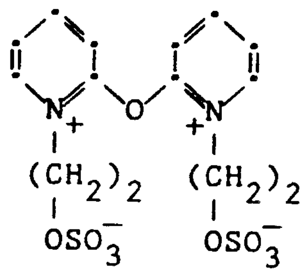

H–1

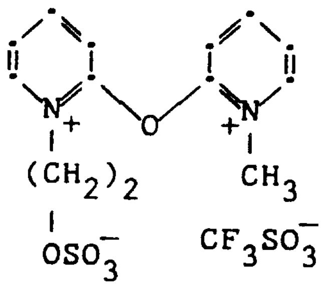

H–2

H–3

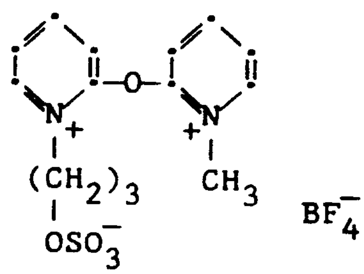

H-4

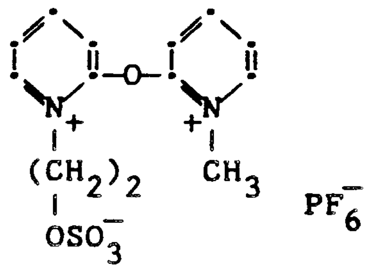

H-5

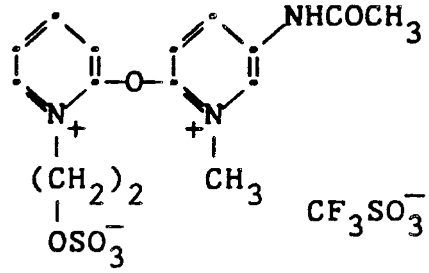

H-6

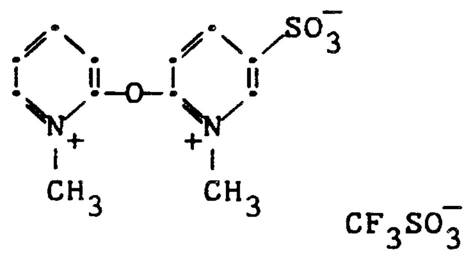

H-7

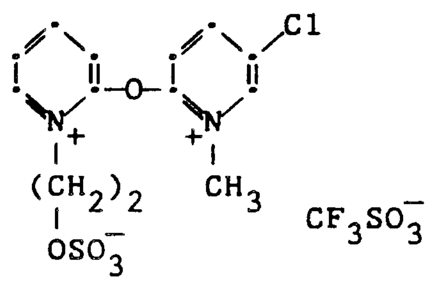

H-8

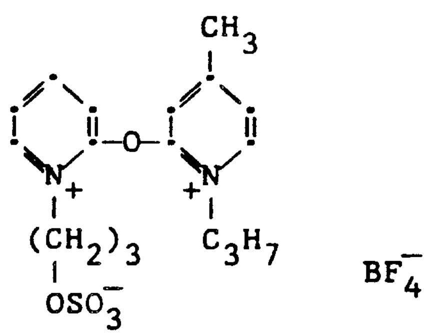

H-9

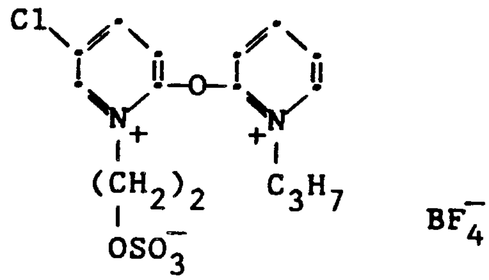

H-10

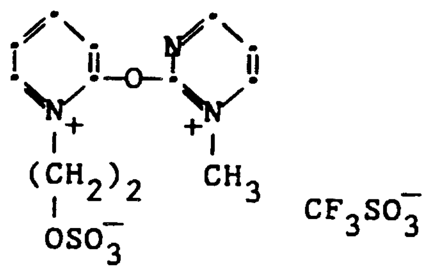

H-11

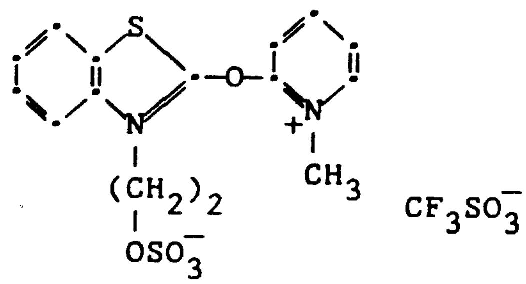

H-12

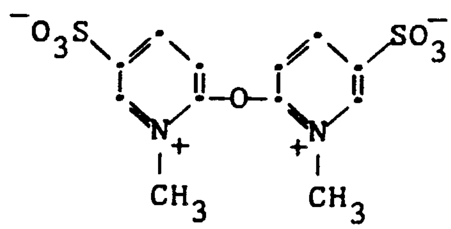

H-13

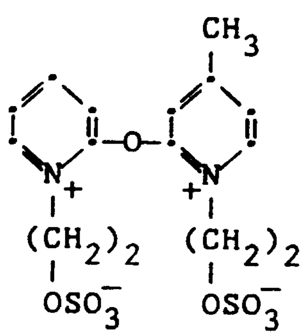

H-14

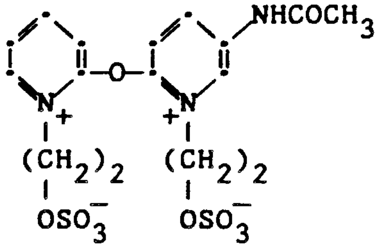

H-15

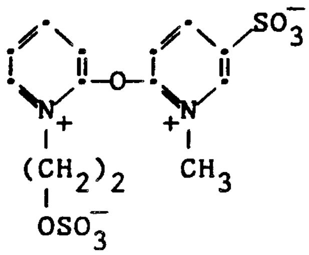

H-16

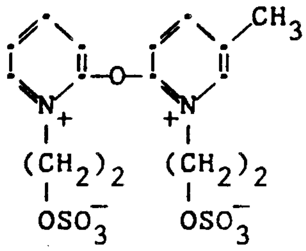

H-17

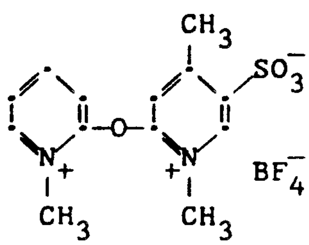

H-18

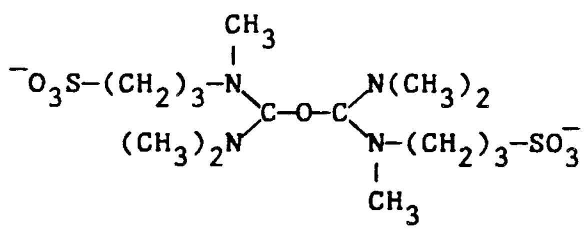

H-19

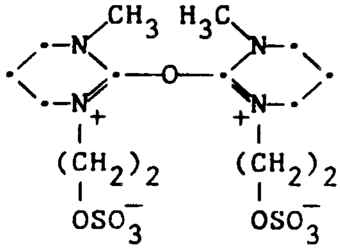

H-20 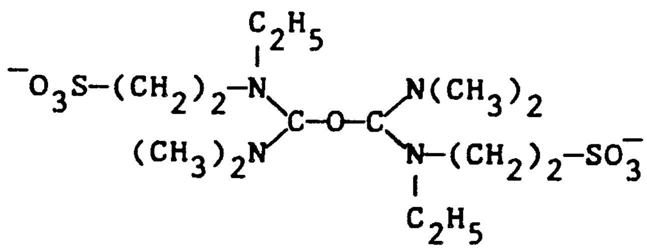

Techniques for the preparation of the hardener compounds of formula (I) are described in the synthesis examples below.

Synthesis Example 1 - Compound H-1

2,2'-Bispyridyl ether (4 g) (as prepared by the method described in Rec. Trav. Chim. 75, 647 (1957)) was dissolved in dry methylene chloride (30 ml) and ethylene sulfate (3 g) was added to the mixture, which was then heated under reflux for 4 hours. After being cooled, the reaction mixture was filtered to yield 6.1 g of a white solid [Intermediate A] having a melting point of 190 °C. 16 g of this compound was prepared and collected and dissolved in a mixture of dry sulfolane (110 ml) and acetonitrile (110 ml). Ethylene sulfate (7 g) was added and the reaction mixture was heated under gentle reflux for 12 hours. After being cooled, the mixture was filtered and product washed with acetonitrile and ether. The product was purified by dissolution in water followed by precipitation with ethyl alcohol to yield 11.2 g of compound H-1. The compound had a melting point of 173 °C and NMR and IR spectra were in accord with the assigned structure.

Synthesis Example 2 - Compound H-2

4.5 g of Intermediate A was dissolved in a mixture of dry sulfolane (30 ml) and dry carbon tetrachloride (30 ml), and then methyl triflate (2.5 g) was added. The mixture was heated under reflux for 4 hours and then cooled. The product was filtered off and washed with methylene chloride. Purification was effected by stirring with warm ethyl alcohol followed by filtration to yield 5 g of compound H-2. The compound had a melting point of 141 °C and the NMR and IR spectra were in accord with the assigned structure.

The compounds of formula (I) can be used to harden any type of gelatin. Types of gelatin useful in the practice of the present invention include alkali-treated gelatin, acid-treated gelatin, partially phthalated gelatin, double-dipped gelatin (i.e., gelatin treated with both alkali and acid), and the like.

According to the present invention, a gelatin composition containing a negatively-charged dispersion of hydrophobic addenda is hardened by combining it with a compound of formula (I).

The negatively-charged dispersion of hydrophobic addenda includes any dispersion of a hydrophobic compound or composition, solid or liquid, having negatively-charged particles or droplets with mean diameters ranging from 0.02 µm to 1.0 µm. Hydrophobic compounds or compositions useful in the practice of the invention include photographic couplers such as dye-forming couplers as described, for example, in Research Disclosure I, Section VII, development modifier-releasing couplers such as those described in U.S. Patent 4,248,962 and Research Disclosure I, Section VII(F), optical brighteners such as those described in Research Disclosure I, Section V, ultraviolet absorbers such as those described in U.S. Patent 4,195,999, oxidized developer scavengers such as those described in Research Disclosure I, Section VII(I) and U.S. Patents 2,728,659 and 4,366,236, or combinations thereof.

The dispersion of hydrophobic addenda may be an oil-in-water type dispersion in which the hydrophobic addenda is a high-boiling water-insoluble organic liquid or is dissolved in a high-boiling water-insoluble organic solvent, such as dibutylphthalate, tricresyl phosphate, or diethyl lauramide. Such dispersions and techniques for preparing them are well-known in the art and are described, for example, in Research Disclosure I, Section XIV, U.S. Patent 2,322,027, and James, The Theory of the Photographic Process 4th, 348-51, 1977. The dispersion may also be a dispersion of solid particles as described, for example in Research Disclosure, Item 16468, December, 1977 and G.B. Patent 1,193,349. The dispersion may also be a latex dispersion of particles of a polymer having the photographic addenda bonded thereto, such as polymeric couplers as described in U.S. Patent 4,612,278 and James, The Theory of the Photographic Process 4th, 347-48, 1977. Additionally, the dispersion may be a latex dispersion of polymer particles that may contain hydrophobic addenda, as described in Research Disclosure, Item 19551, July, 1980, Research Disclosure, Item 15930, July, 1977, and U.S. Patent 4,304,769. The hydrophobic addenda that is dispersed

may itself carry the negative charge instead of or in combination with an anionic surfactant. Such hydrophobes include micelle-forming couplers, which are known in the art. In a preferred embodiment, the hydrophobic dispersion is of a hydrophobic coupler in an oil in water type dispersion using a high-boiling water-insoluble organic solvent. The above dispersions and methods for preparing them are well-known in the art.

The droplets or particles of the dispersion of hydrophobic addenda are imparted with a negative charge through the use of a number of anionic surfactants that are well-known in the art. Anionic surfactants are described in Research Disclosure I, Section XI and McCutcheons's Detergents and Emulsifiers, Allured Publishing Corp., 1973. Such surfactants generally have a hydrophobic portion (preferably of 8 to 25 carbon atoms) appended to at least one anionic group, such as sulfo or sulfato. The hydrophobic portion is believed to associate with the hydrophobic particles or droplets in the dispersion such that the anionic group(s) appended thereto impart a negative charge to the dispersion particles or droplets. Examples of such surfactants include:

Compound

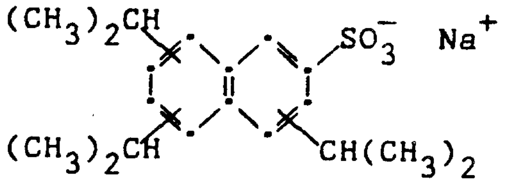

S-1

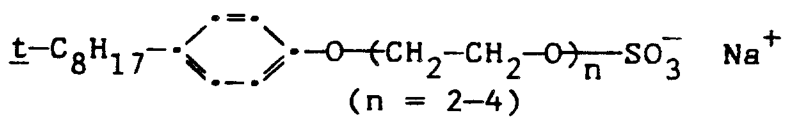

(n = 2-4)

S-2

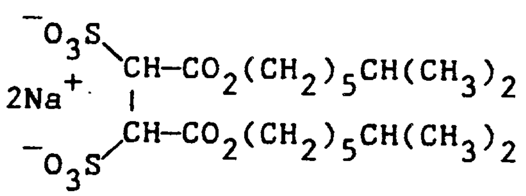

S-3

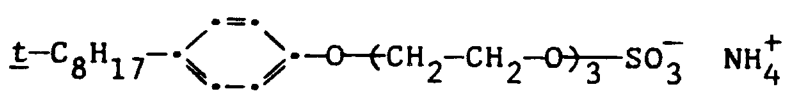

S-4

The method of hardening gelatin according to the invention can be advantageously be utilized to harden gelatin in photographic layers. The present invention provides rapid hardening of gelatin with little or no after-hardening while avoiding many of the adverse photographic effects found with other hardeners, such as speed loss and fog. The compounds of formula (I) exhibit little or no interaction with negatively-charged dispersions of hydrophobic addenda. The hardening compounds of formula (I) also are not highly hygroscopic as are many prior art hardening compounds, making them easy to handle. Additionally, the gelatin hardened according to the invention exhibits desirable physical properties, such as low tackiness.

According to the present invention, a gelatin composition containing a negatively-charged dispersion of a hydrophobic addenda is hardened by combining it with a hardening compound according to formula (I). This is accomplished by techniques known to those skilled in the art. For example, the an aqueous solution of the hardening compound can be applied directly to an unhardened gelatin layer that has been coated on a support. Alternatively, the hardening compound can be mixed with the composition to be hardened shortly before coating it onto a support. Another way of using the compounds of formula (I) is to coat the compound in a gelatin or non-gelatin (e.g., synthetic polymer) layer as an overcoat or as an internal layer of a photographic element in a manner such that it will diffuse into other layers of the element to harden those other layers.

The compounds of formula (I) according to the invention can also be used to partially harden gelatin. This is done, for example, by increasing the chain length of the gelatin, as described in U.S. Patent 4,421,847.

The amount of hardener used to harden gelatin according to the present invention will vary according to the purpose for which the gelatin is being used, the degree of hardening desired, and the particular compound of formula (I) that is used. If only a slight amount of hardening is desired, relatively small amounts of hardening compound can be used. If a greater degree of hardening is desired, relatively large amounts of hardener would be used. The amount of hardener used according to the present invention is preferably between 0.01 and 20 weight percent, based on the weight of dry gelatin, and more preferably between 0.05 and 10 weight percent, based on the weight of dry gelatin.

The hardening compound of formula (I) that is used in the present invention can be used alone, in combination with another hardening compound according to formula (I), or in combination with any of a number of hardening compounds or hardening accelerators known in the art. Examples of known hardening compounds include formaldehyde and free dialdehydes, sulfonate eaters, epoxides, blocked active olefins, and others, as described in Research Disclosure I, Section X. Examples of known hardening accelerators include nonprotonic solvents, as described in German OLS 2,417,586, tert-amines and their salts, as described in British Patent 1,269,983, and polyhydric alcohols.

The present invention is especially useful for hardening gelatin used in gelatin-containing layers in photographic elements. Such elements are well-known in the art. Examples of elements useful in the practice of the present invention include color negative film, color reversal film, color positive film, color print paper, color reversal print paper, black and white film, black and white paper, X-ray rilm, microfilm, and others well-known in the art. Color films and papers generally contain a red-sensitive silver halide layer, a blue-sensitive silver halide layer, and a green-sensitive silver halide layer. The red-sensitive layer usually has a cyan dye-forming coupler associated therewith, the blue-sensitive layer usually has a yellow dye-forming coupler associated therewith, and the green-sensitive layer usually has a magenta dye-forming coupler associated therewith.

Photographic elements with which the present invention is useful generally include, in addition to the above-described light-sensitive layers, various additional layers, such as filter layers, subbing layers, interlayers, antihalation layers, and the like, as described in Research Disclosure I. This Research Disclosure item also describes various addenda, such as surfactants and other coating aids, dye stabilizers, antifoggants, development inhibitor releasing compounds, filter dyes, optical brighteners, antistatic compounds, and the like, that can be included in photographic elements useful in the present invention, either in separate layers or in any of the above-described layers.

The gelatin-containing layers in photographic elements that are advantageously hardened by treatment with the compounds of formula (I) may utilize gelatin as the only binder in the layers, or the gelatin may be combined with other materials. Such materials include, for example, dispersions of water insoluble or slightly soluble polymers, or hydrophilic colloidal polymer materials. Such materials include acrylamide polymers, acrylate polymers, vinyl alcohol polymers, halogenated styrene polymers, poly(sulfonic acid), poly(sulfinic acid), and others described in detail in Research Disclosure I, Section IX.

The invention is further described in the following examples.

## Example

Test compositions were prepared by preparing a series of compositions having 6 weight percent gelatin, 100 ppm of a biocide (1,2-benzothiazolin-3-one), 10 mmole hardener (either hardener compound H-1 or H-2 of formula (I) or comparison hardener CH-1 having the structure shown below) as indicated in Table I per gram of gelatin, and either with or without a negatively-charged hydrophobic dispersion consisting of 2 weight percent of a (2:1) mixture of coupler C-1 and dibutylphthalate, and 0.5% of surfactant S-1,. The degree of gelatin cross-linking was determined by measuring the viscosity of the solution. The reciprocal viscosity was plotted as a function of time and the slope of the curve was used as a measure of the relative rate of cross-linking, with a more negative slope indicating a greater rate of cross-linking.

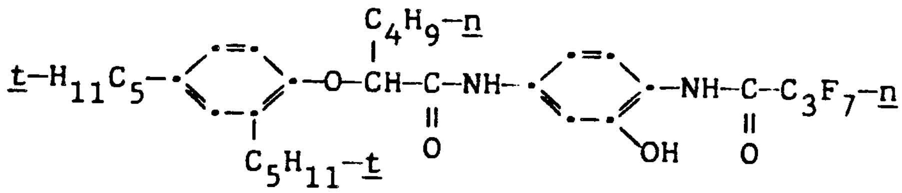

C-1

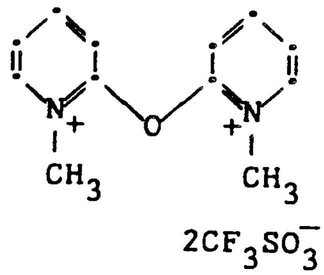

CH-1

The results are presented in FIGS. 1-3. In FIG. 1, which is a plot of reciprocal viscosity versus time for a test solution containing the comparison hardener CH-1 with and without the presence of the negatively-charged hydrophobic dispersion, curve 1 represents the plot for the test solution with no dispersion and curve 2 represents the plot for the test solution containing the dispersion. In FIG. 2, which is a plot of reciprocal viscosity versus time for a test solution containing the hardener H-1 with and without the presence of the negatively-charged hydrophobic dispersion, curve 4 represents the plot for the test solution with no dispersion and curve 3 represents the plot for the test solution containing the dispersion. In FIG. 3, which is a plot of reciprocal viscosity versus time for a test solution containing the hardener H-2 with and without the presence of the negatively-charged hydrophobic dispersion, curve 6 represents the plot for the test solution with no dispersion and curve 5 represents the plot for the test solution containing the dispersion.

As can be seen from the two curves in FIG. 1, curve 2 for the solution containing the negatively-charged hydrophobic dispersion exhibited a less negative slope than curve 1, indicating a lower rate of cross-linking. Curve 2 for the solution containing the dispersion also shows a higher equilibrium reciprocal viscosity than curve 1, which indicates that less cross-linking took place resulting in lower hardening efficiency.

FIGS. 2 and 3 represent plots of reciprocal viscosity versus time for dispersion-containing and non-dispersion-containing test solutions hardened by hardener compounds H-1 and H-2, respectively. In contrast to the comparison hardener in FIG. 1, FIGS. 2 and 3 show that curves 3 and 5 for solutions containing the negatively-charged hydrophobic dispersion had approximately the same slope as curves 4 and 6 (as indicated by the approximately parallel curves) for solutions without the dispersions. Thus, the cross-linking rates of the hardener compounds H-1 and H-2 were not adversely effected by the presence of a negatively-charged hydrophobic dispersion, as was the comparison hardener CH-1. Also, the equilibrium viscosities of the test solutions indicated that the cross-linking efficiency for hardeners H-1 and H-2 was not adversely effected by the presence of the negatively-charged hydrophobic dispersion.

## Claims

**1.** A method for hardening a gelatin composition comprising gelatin and a negatively-charged hydrophobic dispersion, comprising combining said composition with a compound having the formula:

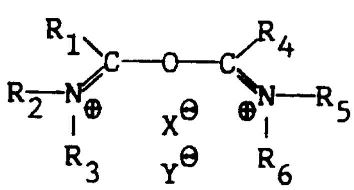

,

wherein $R_1$ represents hydrogen, substituted or unsubstituted alkyl of 1 to 20 carbon atoms, substituted or unsubstituted aralkyl of 7 to 20 carbon atoms, substituted or unsubstituted aryl of 6 to 20

carbon atoms, substituted or unsubstituted alkenyl of 2 to 20 carbon atoms, $-WR_7$, the group

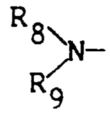

,

or the group

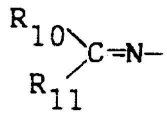

,

wherein W represents sulfur or oxygen, and $R_7$, $R_8$, $R_9$, $R_{10}$, and $R_{11}$ each independently represents substituted or unsubstituted alkyl of 1 to 20 carbon atoms, substituted or unsubstituted aralkyl of 7 to 20 carbon atoms, substituted or unsubstituted aryl of 6 to 20 carbon atoms, or substituted or unsubstituted alkenyl of 2 to 20 carbon atoms, or $R_8$ and $R_9$ together form a substituted or unsubstituted heterocyclic ring, or $R_{10}$ and $R_{11}$ are each independently hydrogen or together form a substituted or unsubstituted ring structure, or $R_1$ together with $R_2$ or $R_3$ forms a substituted or unsubstituted heterocyclic ring,

$R_2$ and $R_3$ each independently represents substituted or unsubstituted alkyl of 1 to 20 carbon atoms, substituted or unsubstituted aralkyl of 7 to 20 carbon atoms, substituted or unsubstituted aryl of 6 to 20 carbon atoms, or substituted or unsubstituted alkenyl of 2 to 20 carbon atoms, or, taken together with $R_1$ or each other, forms a substituted or unsubstituted heterocyclic ring,

$R_4$, $R_5$, and $R_6$ are defined as are $R_1$, $R_2$, and $R_3$, respectively, and are the same as or different from $R_1$, $R_2$, or $R_3$, and

$X^{\ominus}$ represents an anionic portion of the compound to form an intramolecular salt and $Y^{\ominus}$ represents an anion or an anionic portion of the compound to form an intramolecular salt.

**2.** A method according to Claim 1 wherein $X^{\ominus}$ is a substituent on $R_1$, $R_2$, $R_3$, $R_4$, $R_5$, or $R_6$ and is selected from the group consisting of sulfato, sulfo, phosphono, and $SO_2NHCOR$ where R is substituted or unsubstituted alkyl.

**3.** A method according to Claims 1-2 wherein $Y^{\ominus}$ is an anionic portion of the compound to form an intramolecular salt.

**4.** A method according to Claims 1-3 wherein at least one combination of two members of $R_1$, $R_2$, $R_3$, $R_4$, $R_5$, $R_8$, $R_9$, $R_{10}$, and $R_{11}$ forms a substituted or unusbstituted ring.

**5.** A method according to Claims 1-4 wherein at least one combination of two members of $R_1$, $R_2$, $R_3$, $R_4$, $R_5$, and $R_6$ forms a substituted or unsubstituted heterocyclic ring.

**6.** A method according to Claims 1-5 wherein at least one combination of either $R_1$ and $R_2$, or $R_4$ and $R_5$ forms a heterocyclic ring.

**7.** A method according to Claim 6 wherein $X^{\ominus}$ is a substituent on one of $R_3$ or $R_6$ that is attached to a heterocyclic nitrogen.

**8.** A method according to Claims 4-7 wherein the ring is a pyridylium ring.

**9.** A method according to Claims 1-8 wherein $R_1$ and $R_2$ form a substituted or unsubstituted pyridylium ring, $R_4$ and $R_5$ form a substituted or unsubstituted pyridylium ring, $R_3$ and $R_6$ are each independently substituted or unsubstituted alkyl of 1 to 20 carbon atoms, and at least one of $R_3$ and $R_6$ is substituted with $X^{\ominus}$.

10. A method according to Claims 4-9 wherein the pair $R_1$ and $R_2$ and the pair $R_4$ and $R_5$ each form said ring.

11. A method according to Claim 10 wherein $X^{\ominus}$ is a substituent on one of $R_3$ or $R_6$ and $Y^{\ominus}$ is a substituent on the other of $R_3$ or $R_6$.

12. A composition comprising gelatin and a negatively charged hydrophobic dispersion characterized in that said composition has been hardened by the method of claims 1-11.

13. A photographic element comprising a support having thereon at least one layer comprising gelatin and a negatively charged hydrophobic dispersion, characterized in that said composition has been hardened by the method of claims 1-11.

**Patentansprüche**

1. Verfahren zur Härtung einer Gelatine-Zusammensetzung mit Gelatine und einer negativ geladenen hydrophoben Dispersion, bei dem man die Zusammensetzung kombiniert mit einer Verbindung der Formel:

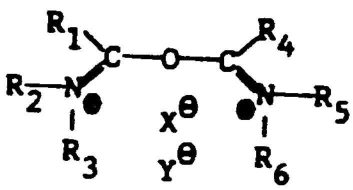

,

worin bedeuten:
$R_1$ Wasserstoff, substituiertes oder unsubstituiertes Alkyl mit 1 bis 20 Kohlenstoffatomen, substituiertes oder unsubstituiertes Aralkyl mit 7 bis 20 Kohlenstoffatomen, substituiertes oder unsubstituiertes Aryl mit 6 bis 20 Kohlenstoffatomen, substituiertes oder unsubstituiertes Alkenyl mit 2 bis 20 Kohlenstoffatomen, $-WR_7$,
die Gruppe

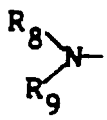

,

oder die Gruppe

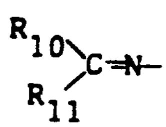

,

worin bedeuten:
W Schwefel oder Sauerstoff und $R_7$, $R_8$, $R_9$, $R_{10}$ und $R_{11}$ jeweils unabhängig voneinander substituiertes oder unsubstituiertes Alkyl mit 1 bis 20 Kohlenstoffatomen, substituiertes oder unsubstituiertes Aralkyl mit 7 bis 20 Kohlenstoffatomen, substituiertes oder unsubstituiertes Aryl mit 6 bis 20 Kohlenstoffatomen, oder substituiertes oder unsubstituiertes Alkenyl mit 2 bis 20 Kohlenstoffatomen, oder $R_8$ und $R_9$ bilden gemeinsam einen substituierten oder unsubstituierten heterocyclischen Ring, oder $R_{10}$ und $R_{11}$ stehen jeweils unabhängig voneinander für Wasserstoff oder bilden gemeinsam eine substituierte oder unsubstituierte Ringstruktur, oder $R_1$ bildet mit $R_2$ oder $R_3$ einen substituierten oder unsubstituierten heterocyclischen Ring,
$R_2$ und $R_3$ jeweils unabhängig voneinander substituiertes oder unsubstituiertes Alkyl mit 1 bis 20

Kohlenstoffatomen, substituiertes oder unsubstituiertes Aralkyl mit 7 bis 20 Kohlenstoffatomen, substituiertes oder unsubstituiertes Aryl mit 6 bis 20 Kohlenstoffatomen oder substituiertes oder unsubstituiertes Alkenyl mit 2 bis 20 Kohlenstoffatomen, oder gemeinsam mit $R_1$ oder jedem anderen Rest einen substituierten oder unsubstituierten heterocyclischen Ring,
$R_4$, $R_5$ und $R_6$ haben die für $R_1$, $R_2$ bzw. $R_3$ angegebene Bedeutung und sind gleich oder verschieden von $R_1$, $R_2$ oder $R_3$, und
$X^{\ominus}$ steht für einen anionischen Teil der Verbindung unter Bildung eines intramolekularen Salzes, und $Y^{\ominus}$ steht für ein Anion oder einen anionischen Anteil der Verbindung unter Bildung eines intramolekularen Salzes.

2. Verfahren nach Anspruch 1, bei dem $X^{\ominus}$ ein Substituent an $R_1$, $R_2$, $R_3$, $R_4$, $R_5$ oder $R_6$ ist und ausgewählt ist aus der Gruppe bestehend aus Sulfato, Sulfo, Phosphono und $-SO_2NHCOR$, worin R für substituiertes oder unsubstituiertes Alkyl steht.

3. Verfahren nach Ansprüchen 1 bis 2, bei dem $Y^{\ominus}$ ein anionischer Anteil der Verbindung unter Bildung eines intramolekularen Salzes ist.

4. Verfahren nach Ansprüchen 1 bis 3, bei dem mindestens eine Kombination von zwei Gliedern von $R_1$, $R_2$, $R_3$, $R_4$, $R_5$, $R_8$, $R_9$, $R_{10}$ und $R_{11}$ einen substituierten oder unsubstituierten Ring bildet.

5. Verfahren nach Ansprüchen 1 bis 4, bei dem mindestens eine Kombination von zwei Gliedern von $R_1$, $R_2$, $R_3$, $R_4$, $R_5$ und $R_6$ einen substituierten oder unsubstituierten heterocyclischen Ring bildet.

6. Verfahren nach Ansprüchen 1 bis 5, bei dem mindestens eine Kombination von entweder $R_1$ und $R_2$, oder $R_4$ und $R_5$ einen heterocyclischen Ring bildet.

7. Verfahren nach Anspruch 6, bei dem $X^{\ominus}$ ein Substituent an einem der Reste $R_3$ oder $R_6$ ist, der an ein heterocyclisches Stickstoffatom gebunden ist.

8. Verfahren nach Ansprüchen 4 bis 7, bei dem der Ring ein Pyridyliumring ist.

9. Verfahren nach Ansprüchen 1 bis 8, bei dem $R_1$ und $R_2$ einen substituierten oder unsubstituierten Pyridyliumring bilden, $R_4$ und $R_5$ einen substituierten oder unsubstituierten Pyridyliumring bilden, $R_3$ und $R_6$ jeweils unabhängig voneinander stehen für substituiertes oder unsubstituiertes Alkyl mit 1 bis 20 Kohlenstoffatomen, und bei dem mindestens einer der Reste $R_3$ und $R_6$ substituiert ist durch $X^{\ominus}$.

10. Verfahren nach Ansprüchen 4 bis 9, bei dem das Paar $R_1$ und $R_2$ und das Paar $R_4$ und $R_5$ jeweils den Ring bilden.

11. Verfahren nach Anspruch 10, bei dem $X^{\ominus}$ ein Substituent an einem der Reste $R_3$ oder $R_6$ ist, und bei dem $Y^{\ominus}$ ein Substituent an dem anderen der Reste $R_3$ oder $R_6$ ist.

12. Zusammensetzung mit Gelatine und einer negativ geladenen hydrophoben Dispersion, dadurch gekennzeichnet, daß die Dispersion nach dem Verfahren der Ansprüche 1 bis 11 gehärtet worden ist.

13. Photographisches Element mit einem Träger, auf dem sich mindestens eine Schicht mit Gelatine und einer negativ geladenen hydrophoben Dispersion befindet, dadurch gekennzeichnet, daß die Zusammensetzung nach dem Verfahren der Ansprüche 1 bis 11 gehärtet worden ist.

## Revendications

1. Méthode pour tanner une composition gélatinée comprenant de la gélatine et une dispersion hydrophobe chargée négativement qui consiste à combiner la composition avec un composé de formule :

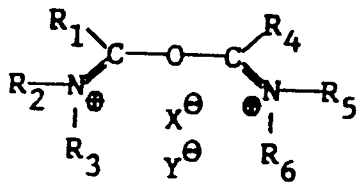

où

$R_1$ représente l'hydrogène, alkyle substitué ou non de 1 à 20 atomes de carbone, aralkyle substitué ou non de 7 à 20 atomes de carbone, aryle substitué ou non de 6 à 20 atomes de carbone, alkényle substitué ou non de 2 à 20 atomes de carbone,
$-WR_7$, le groupe

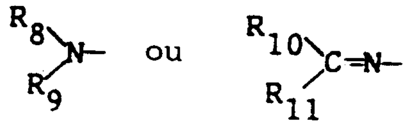

où W représente le soufre ou l'oxygène et $R_7$, $R_8$, $R_9$, $R_{10}$ et $R_{11}$ représentent chacun séparément alkyle substitué ou non de 1 à 20 atomes de carbone, aralkyle substitué ou non de 7 à 20 atomes de carbone, aryle substitué ou non de 6 à 20 atomes de carbone, alkényle substitué ou non de 2 à 20 atomes de carbone, ou

$R_8$ et $R_9$ ensemble forment un hétérocycle substitué ou non, ou $R_{10}$ et $R_{11}$ chacun séparément représentent l'hydrogène ou ensemble forment une structure cyclique substituée ou non, ou $R_1$ ensemble avec $R_2$ ou $R_3$ forme un hétérocycle substitué ou non,

$R_2$ et $R_3$ chacun séparément représentent alkyle substitué ou non de 1 à 20 atomes de carbone, aralkyle substitué ou non de 7 à 20 atomes de carbone, aryle substitué ou non de 6 à 20 atomes de carbone, alkényle substitué ou non de 2 à 20 atomes de carbone ou ensemble avec $R_1$, ou $R_2$ et $R_3$ ensemble forment un hétérocycle substitué ou non,

$R_4$, $R_5$, et $R_6$ ont la même définition que $R_1$, $R_2$ et $R_3$ respectivement, et sont les mêmes que ou différents de $R_1$, $R_2$, ou $R_3$ ; et

$X^{\ominus}$ représente la portion anionique du composé pour former un sel intramoléculaire et $Y^{\ominus}$ représente un anion ou la portion anionique du composé pour former un sel intramoléculaire.

2. Méthode selon la revendication 1 dans lequel $X^{\ominus}$ est un substituant sur $R_1$, $R_2$, $R_3$, $R_4$, $R_5$ ou $R_6$ et est choisi dans le groupe sulfato, sulfo, phosphono et $SO_2NHCOR$ où R est alkyle substitué ou non.

3. Méthode selon les revendications 1 et 2 où $Y^{\ominus}$ est la portion organique du composé pour former un sel intramoléculaire.

4. Méthode selon les revendications 1 à 3 où au moins une combinaison de deux radicaux $R_1$, $R_2$, $R_3$, $R_4$, $R_5$, $R_6$, $R_7$, $R_8$, $R_9$, $R_{10}$ et $R_{11}$ forme un cycle substitué ou non.

5. Méthode selon les revendications 1 à 4 où au moins une combinaison de deux radicaux $R_1$, $R_2$, $R_3$, $R_4$, $R_5$ et $R_6$ forme un hétérocycle substitué ou non.

6. Méthode selon les revendications 1 à 5 où au moins une combinaison de $R_1$ et $R_2$, ou de $R_4$ et $R_5$ forme un hétérocycle.

7. Méthode selon la revendication 6 où $X^{\ominus}$ est un substituant sur $R_3$ ou $R_6$ qui est rattaché à l'azote de l'hétérocycle.

8. Méthode selon l'une quelconque des revendications 4 à 7 où le cycle est un cycle pyridylium.

**9.** Méthode selon l'une quelconque des revendications 1 à 8 où $R_1$ et $R_2$ forment un cycle pyridylium substitué ou non, $R_4$ et $R_5$ forment un cycle pyridylium substitué ou non, $R_3$ et $R_6$ sont chacun séparément alkyle substitué ou non de 1 à 20 atomes de carbone, et au moins $R_3$ ou $R_6$ est substitué par $X^{\ominus}$.

**10.** Méthode selon les revendications 4 à 9 où la paire $R_1$ et $R_2$ ou la paire $R_4$ et $R_5$ forme chacune le cycle.

**11.** Méthode selon la revendication 10 où $X^{\ominus}$ est un substituant sur l'un des groupes $R_3$ ou $R_6$ et $Y^{\ominus}$ estun substituant sur l'autre des groupes $R_3$ ou $R_6$.

**12.** Composition comprenant de la gélatine et d'une dispersion hydrophobe chargée négativement, tannée par le procédé des revendications 1 à 11.

**13.** Produit photographique comprenant un support recouvert d'une couche comprenant de la gélatine et une dispersion hydrophobe chargée négativement dans lequel la composition a été tannée par le procédé des revendications 1 à 11.

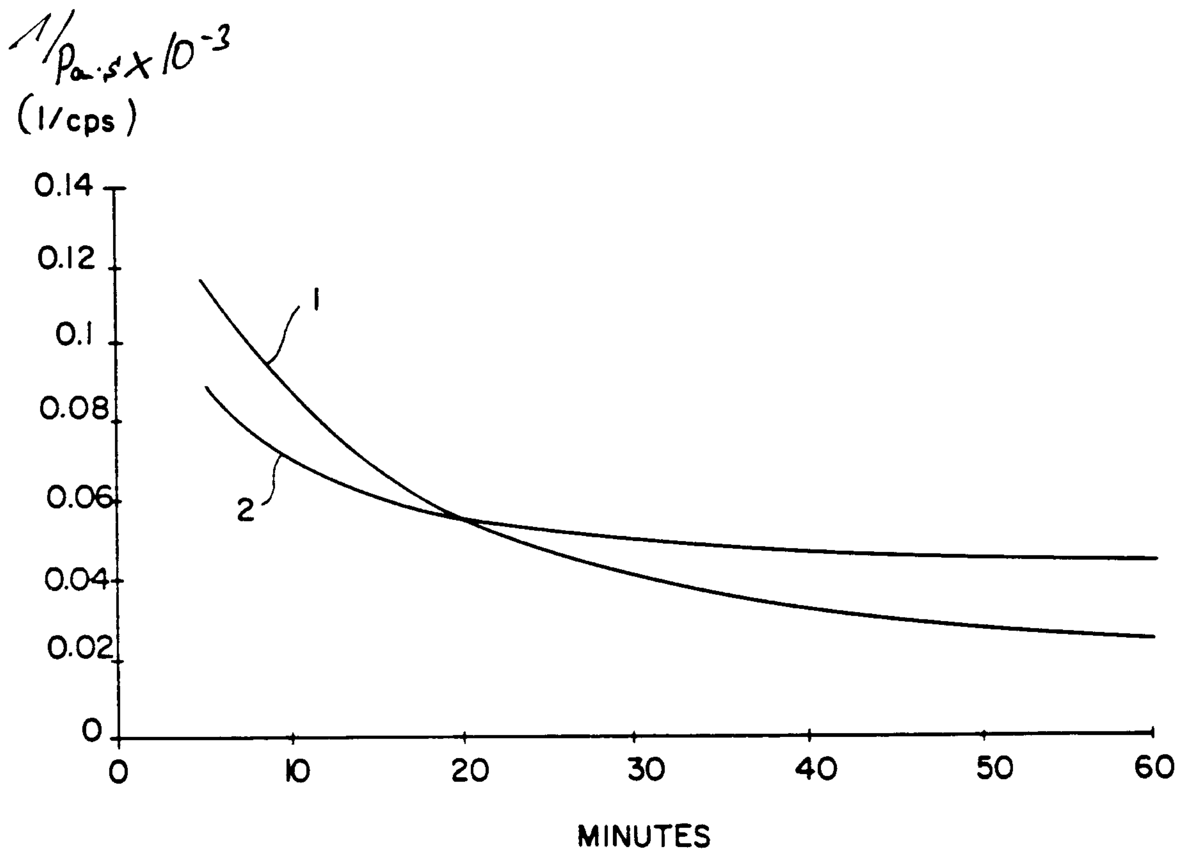
1/Pa·s x 10^-3
(1/cps)
0.14
0.12
0.1
0.08
0.06
0.04
0.02
0
0
10
20
30
40
50
60
MINUTES
1
2

FIG. 1

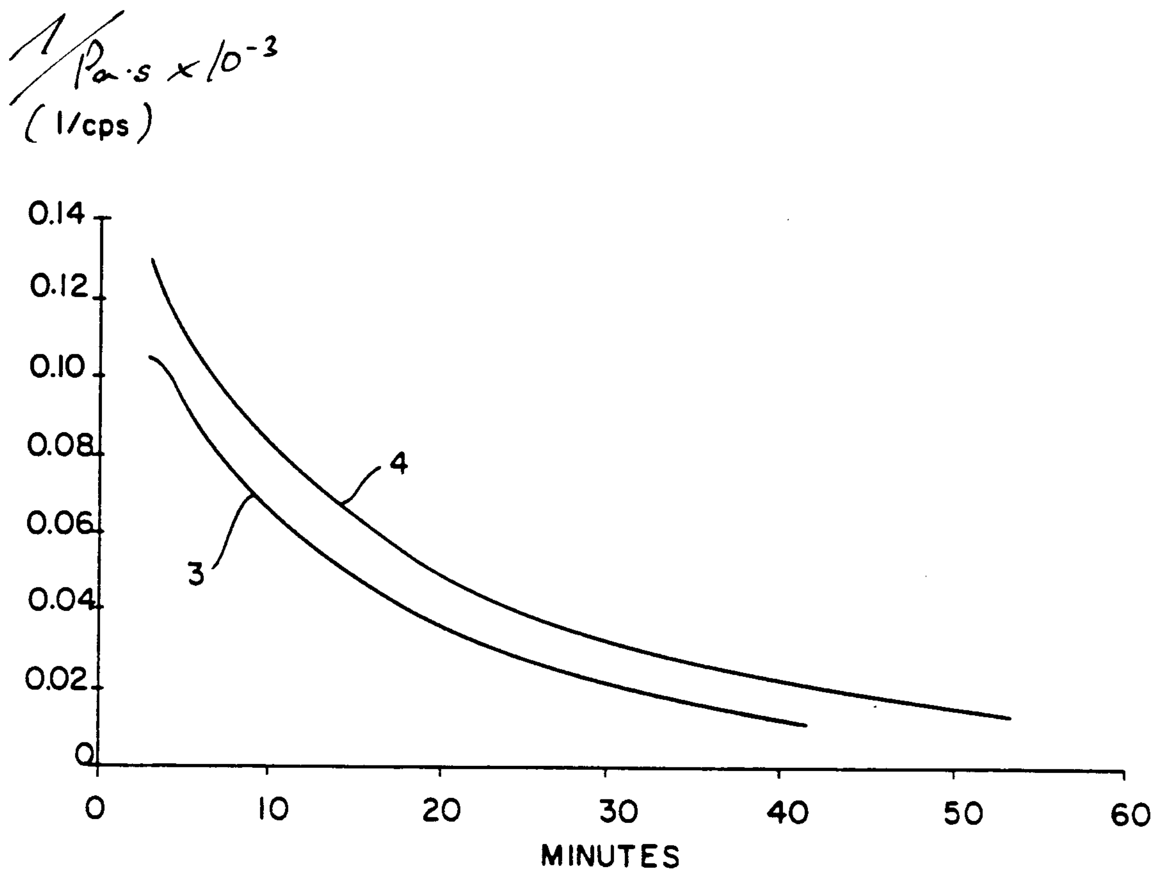
1/Pa·s x 10⁻³
(1/cps)
0.14
0.12
0.10
0.08
0.06
0.04
0.02
0
4
3
0
10
20
30
40
50
60
MINUTES

FIG. 2

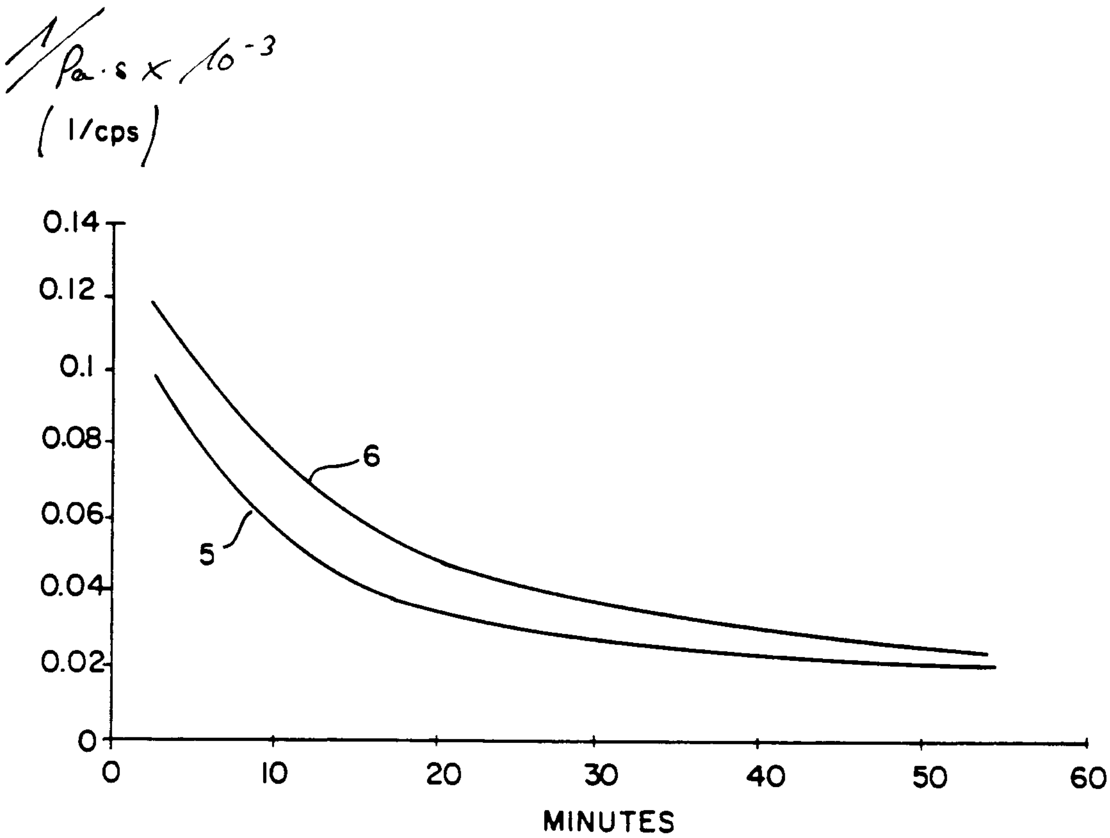
1/Pa·s x 10^-3
(1/cps)
0.14
0.12
0.1
0.08
0.06
0.04
0.02
0
0
10
20
30
40
50
60
MINUTES
6
5

FIG. 3